# EUROPÄISCHE PATENTSCHRIFT

(11) **EP 1 840 478 B1**
(45) Veröffentlichungstag und Bekanntmachung des Hinweises auf die Patenterteilung: **17.02.2016**
(21) Anmeldenummer: 06405132.9
(22) Anmeldetag: 29.03.2006
(51) Int. Cl.: F24F 13/18, F24F 7/013, F24F 12/00, E06B 7/02

(54) **Fensterbereich**
Window's area
Surface autour d'une fenêtre

(43) Veröffentlichungstag der Anmeldung: 03.10.2007
(73) Patentinhaber: FENSTERFABRIK ALBISRIEDEN AG, CH-8047 Zürich (CH)
(72) Erfinder: Bühlmann, Bernhard, 8001 Zürich (CH); Eugster, Peter, 8104 Weiningen (CH); Frei, Urs, 8047 Zürich (CH)
(74) Vertreter: Wagner, Wolfgang Heribert

(56) Entgegenhaltungen:
- EP-A- 0 342 899
- DE-A1- 3 200 114
- DE-A1- 4 435 064
- DE-A1- 10 010 817
- DE-C1- 4 343 107
- GB-A- 2 126 333

## Beschreibung

Die Erfindung betrifft einen Fensterbereich gemäss dem Oberbegriff des Anspruchs 1, wie sie in Aussenwänden von Gebäuden aller Art, vor allem Wohn- und Bürogebäuden vorkommen.

### Stand der Technik

Gattungsgemässe Fensterbereiche sind allgemein bekannt.

Eine Anordnung gemäß dem Oberbegriff von Anspruch 1 ist aus der Drucksrift DE 20 2004 004 432 U1 bekannt.

### Darstellung der Erfindung

Der Erfindung liegt die Aufgabe zu Grunde, die Möglichkeit zu eröffnen, dass im Fensterbereich ein Gerät zum Luftaustausch angeordnet wird, das Abluft aus einem geschlossenen Raum abführt und Zuluft von aussen zuführt, insbesondere einen Lüfter, in dem vorzugsweise zwischen Zuluft und Abluft zwecks Annäherung der Temperatur der ersteren an die Raumtemperatur Wärme ausgetauscht wird.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: einen erfindungsgemässen Fensterbereich von innen,
- Fig. 2: einen horizontalen Schnitt durch den Fensterbereich gemäss Fig. 1,
- Fig. 3: einen vertikalen Schnitt durch den Fensterbereich gemäss Fig. 1, 2,
- Fig. 4: einen horizontalen Schnitt entsprechend Fig. 2 durch einen abgewandelten erfindungsgemässen Fensterbereich und
- Fig. 5: einen vertikalen Schnitt entsprechend Fig. 3 durch den abgewandelten Fensterbereich von Fig. 4.

### Wege zur Ausführung der Erfindung

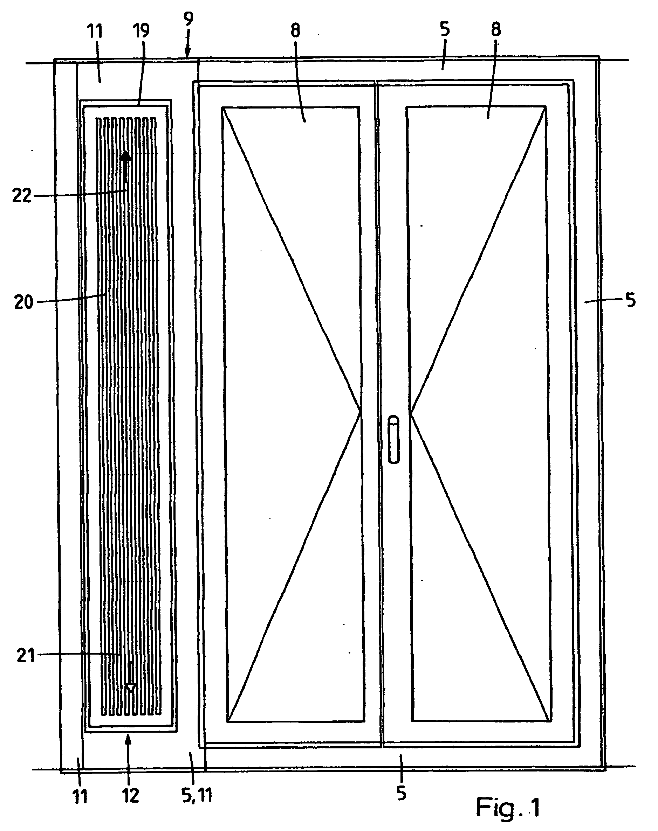

Der erfindungsgemässe Fensterbereich umfasst (Fig. 1-3) eine Aussendämmung 1, welche vorzugsweise aus einem festen wärmeisolierenden Material wie z.B. aus Stypropor oder Mineralwolle besteht und eine im wesentlichen durchgehende, eine Fassade bedeckende vertikale Schicht konstanter Dicke bildet, die gewöhnlich an der Aussenseite einer Wand 2, die z.B. gemauert oder betoniert sein kann, angeordnet ist und aussen von einer mit kleinem Abstand vorgeordneten hinterlüfteten Aussenverkleidung 3, welche z.B. aus Holz, Naturstein oder Aluminium besteht, bedeckt ist. In der Aussendämmung 1 ist eine rechteckige Fensteröffnung 4 ausgespart, in der ein Fensterrahmen 5 angeordnet ist, welcher die Fensteröffnung 4 an der Innenseite umrahmt. Im Bereich einer die Fensteröffnung 4 umgebenden Leibung 6 ist die Aussendämmung 1 ebenfalls von der Aussenverkleidung 3 verdeckt, in der dort ein Rolladen 7 geführt ist. Am Fensterrahmen 5 sind zwei Fensterflügel 8 angeschlagen, die nach innen geschwenkt werden können.

Neben dem Fensterrahmen 5 ist eine schmale, ebenfalls rechteckige Verkleidung 9 angebracht, welche die Innenseite der Aussendämmung 1 zwischen dem Fensterrahmen 5 und der etwas weiter als die Aussendämmung 1 ausgeschnittenen Wand 2 bedeckt. Die Verkleidung 9 umfasst eine Platte 10 und einen dieselbe z.T. umgebenden, z.T. bedeckenden, rundum etwas vorspringenden Rahmen 11, der teilweise mit einem Seitenteil des Fensterrahmens 5 zusammenfallen kann und eine flache rechteckige Vertiefung 12 umgibt, deren Grund von der Platte 10 gebildet wird. Der Fensterrahmen 5 und die Verkleidung 9 können aus Holz bestehen.

In der Nähe des oberen Endes der Vertiefung 12 ist in der Platte 10 eine innere Zuluftöffnung 13 angeordnet, an welche eine Zuluftleitung 14 anschliesst, die horizontal und um 90° gebogen durch die Aussendämmung 1 zu einer schlitzförmigen äusseren Zuluftöffnung 15 in der Aussenverkleidung 3 an der Leibung 6 führt. In der Nähe des unteren Endes der Vertiefung 12, also vertikal von der inneren Zuluftöffnung 13 beabstandet, ist in der Platte 10 eine entsprechende innere Abluftöffnung 16 angeordnet, von der eine Abluftleitung 17 horizontal und gerade durch die Aussendämmung 1 zu einer äusseren Abluftöffnung 18 an deren Aussenseite führt. Die Abluftleitung 17 mündet somit in den Spalt zwischen der Aussendämmung 1 und der Aussenverkleidung 3.

In die Vertiefung 12 ist passgenau ein Lüfter 19 eingesetzt mit einem quaderförmigen Gehäuse von ungefähr quadratischem Grundriss, dessen Höhe ganz oder annähernd der der Fensterflügel 8 entspricht. Er weist an seiner in der Vertiefung 12 liegenden Rückseite einen Zulufteinlass auf, der sich mit der inneren Zuluftöffnung 13 deckt und einen Abluftauslass, der sich mit der inneren Abluftöffnung 16 deckt. An der Vorderseite weist er hinter einem Gitter 20 einen Zuluftauslass 21 auf, der etwa auf der Höhe des Abluftauslasses liegt sowie darüber, also vertikal versetzt, einen Ablufteinlass 22 etwa auf der Höhe des Zulufteinlasses. Der Ablufteinlass 22 des Lüfters 19 ist mit dem Abluftauslass durch einen Abluftkanal verbunden, welcher mit einem den Zulufteinlass mit dem Zuluftauslass 21 verbindenden Zuluftkanal einen Wärmetauscher bildet. In mindestens einem der beiden Kanäle ist ein Ventilator vorgesehen, der eine Luftströmung vom Einlass zum Auslass erzeugt, sodass Frischluft über die Zuluftleitung 14 an der äusseren Zuluftöffnung 15 angesaugt und schliesslich am Zuluftauslass 21 in den Raum abgegeben wird, während Abluft durch den Ablufteinlass 22 aus dem Raum abgezogen und über die Abluftleitung 17 der äusseren Abluftöffnung 18 zugeführt und dort nach aussen abgegeben wird. Es sind zahlreiche Lüfter bekannt, die hier zum Einsatz kommen können. Z.B. kann der Lüfter 19 im wesentlichen wie die in EP 1 510 764 A1 beschriebene Lüftungseinrichtung aufgebaut sein, wobei allenfalls die Lage der Ein- und Auslässe betreffende Anpassungen durch eine Ergänzung oder Aenderung des Zuluft- und des Abluftkanals vorgenommen werden müssen.

Durch die vertikale Versetzung des Zuluftauslasses 21 und des Ablufteinlasses 22 ist unerwünschte Vermischung, also sofortiges Wiederabziehen eines Teils der eben eingeleiteten Zuluft auf ein nicht störendes Ausmass reduziert. An der Aussenseite sind die äussere Zuluftöffnung 15 und die äussere Abluftöffnung 18 ausser durch die vertikale Versetzung noch dadurch getrennt, dass die erstere in der Aussenverkleidung 3 im Bereich der Leibung 6 angebracht ist und die letztere hinter der Aussenverkleidung 3 an der Aussenseite der Aussendämmung 1 liegt. Eine in diesem Fall besonders störende Vermischung von Abluft und Zuluft - sofortiges Wiederzuführen eines Teils der eben abgeleiteten Abluft als Zuluft - ist daher so gut wie vollständig unterbunden.

Durch den Lüfter 19 wird nicht nur Zuluft zu- und Abluft abgeführt, es wird auch die Temperatur der Zuluft an diejenige der Abluft, also die Temperatur des oft geheizten oder auch gekühlten Raumes angenähert und dadurch eine u.U. beträchtliche Energieeinsparung erzielt.

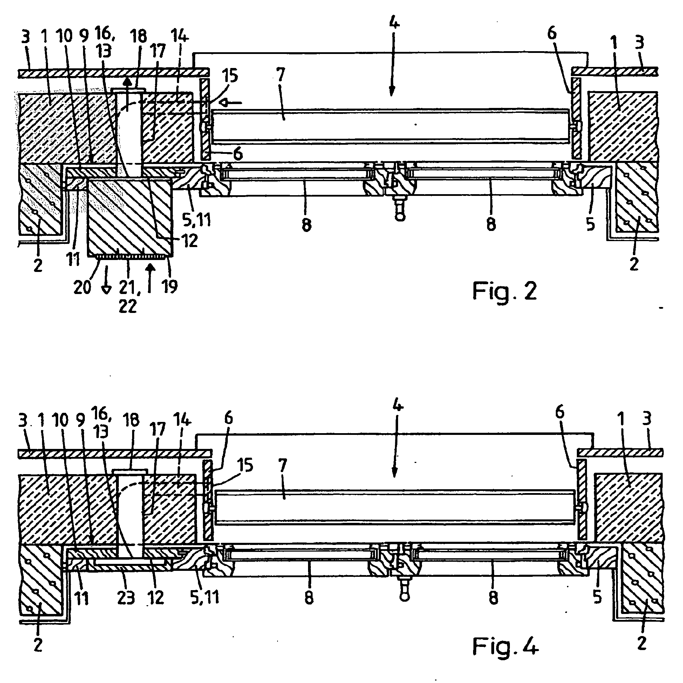

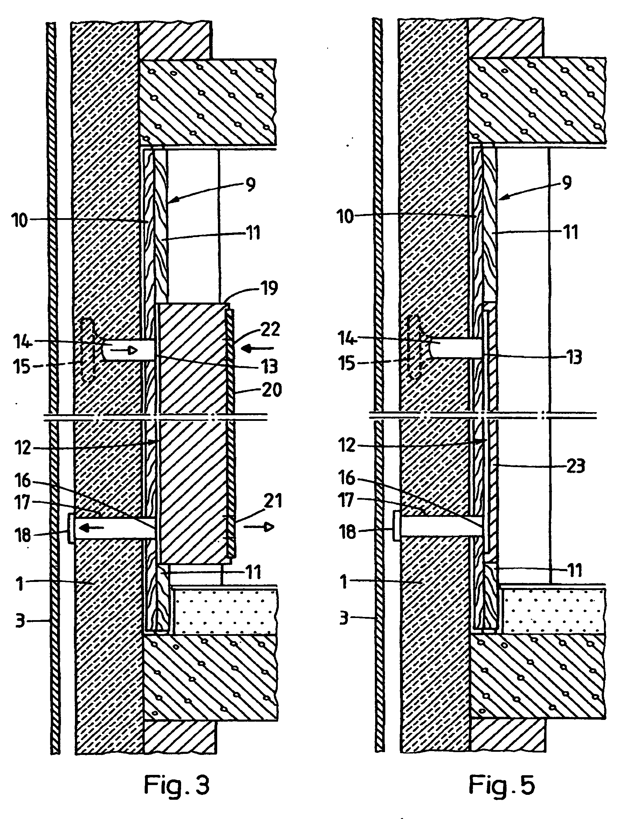

Falls jedoch kein Lüfter eingesetzt werden soll, so kann (Fig. 4, 5) in die Vertiefung 12 stattdessen einfach eine passgenaue rechteckige Verschlussplatte 23 eingesetzt werden, die die innere Zuluftöffnung 13 und die innere Abluftöffnung 16 vom Raum trennt. Vorzugsweise sind der Lüfter 19 und die Verschlussplatte 23 auf gleiche Weise mit der Verkleidung 9 reversibel verbindbar, z.B. verschraubbar, sodass sie auch nach Fertigstellung des Gebäudes leicht ausgetauscht werden können.

### Bezugszeichenliste

- 1: Aussendämmung
- 2: Wand
- 3: Aussenverkleidung
- 4: Fensteröffnung
- 5: Fensterrahmen
- 6: Leibung
- 7: Rolladen
- 8: Fensterflügel
- 9: Verkleidung
- 10: Platte
- 11: Rahmen
- 12: Vertiefung
- 13: innere Zuluftöffnung
- 14: Zuluftleitung
- 15: äussere Zuluftöffnung
- 16: innere Abluftöffnung
- 17: Abluftleitung
- 18: äussere Abluftöffnung
- 19: Lüfter
- 20: Gitter
- 21: Zuluftauslass
- 22: Ablufteinlass
- 23: Verschlussplatte

## Patentansprüche

1. Fensterbereich mit einer Wand (2) und einer an deren Aussenseite angeordneten Aussendämmung (1), welche von einer Fensteröffnung (4) durchbrochen sind und einem die Fensteröffnung (4) umgebenden Fensterrahmen (5), **dadurch gekennzeichnet, dass** die Wand (2) etwas weiter ausgeschnitten ist, sodass eine Innenseite der Aussendämmung (1) in einem Bereich seitlich neben dem Fensterrahmen (5) von der Wand (2) frei ist und dort an der besagten Innenseite eine innere Zuluftöffnung (13) und eine innere Abluftöffnung (16) angeordnet sind, welche jeweils mittels einer durch die Aussendämmung (1) geführten Zuluftleitung (14) bzw. Abluftleitung (17) mit einer ausserhalb des Fensterrahmens (5) angeordneten äusseren Zuluftöffnung (15) bzw. äusseren Abluftöffnung (18) verbunden sind.

2. Fensterbereich nach Anspruch 1, **dadurch gekennzeichnet, dass** die innere Zuluftöffnung (13) und die innere Abluftöffnung (16) in einer an den Fensterrahmen (5) anschliessenden, dort die Innenseite der Aussendämmung (1) bedeckenden Verkleidung (9) liegen.

3. Fensterbereich nach Anspruch 2, **dadurch gekennzeichnet, dass** die innere Zuluftöffnung (13) und die innere Abluftöffnung (16) in einer Vertiefung (12) der Verkleidung (9) angeordnet sind.

4. Fensterbereich nach einem der Ansprüche 1 bis 3, **dadurch gekennzeichnet, dass** die innere Zuluftöffnung (13) und die innere Abluftöffnung (16) vertikal voneinander beabstandet sind.

5. Fensterbereich nach einem der Ansprüche 1 bis 4, **dadurch gekennzeichnet, dass** die äussere Zuluftöffnung (15) an der Leibung (6) der Fensteröffnung (4) liegt, während die äussere Abluftöffnung (18) an der der Innenseite gegenüberliegenden Aussenseite der Aussendämmung (1) liegt oder umgekehrt.

6. Fensterbereich nach einem der Ansprüche 1 bis 5, **dadurch gekennzeichnet, dass** die Zuluftleitung (14) und die Abluftleitung (17) jeweils horizontal durch die Aussendämmung (1) geführt sind.

7. Fensterbereich nach einem der Ansprüche 1 bis 6, **dadurch gekennzeichnet, dass** sie einen neben dem Fensterrahmen (5) angeordneten Lüfter (19) umfasst mit einem an die innere Zuluftöffnung (13) anschliessenden Zulufteinlass und einem über einen Zuluftkanal mit demselben verbundenen Zuluftauslass (21) sowie einem an die innere Abluftöffnung (16) anschliessenden Abluftauslass und einem über einen Abluftkanal mit demselben verbundenen Ablufteinlass (22), wobei der Zuluftkanal und der Abluftkanal einen Wärmetauscher bilden.

8. Fensterbereich nach Anspruch 7, **dadurch gekennzeichnet, dass** der Lüfter (19) mindestens im Zuluftkanal oder im Abluftkanal einen Ventilator aufweist.

9. Fensterbereich nach Anspruch 3 und Anspruch 7 oder 8, **dadurch gekennzeichnet, dass** der Lüfter (19) mit einer Rückwand in die Vertiefung (12) der Verkleidung (9) eingesetzt ist.

10. Fensterbereich nach einem der Ansprüche 7 bis 9, **dadurch gekennzeichnet, dass** der Zuluftauslass (21) und der Ablufteinlass (22) vertikal voneinander beabstandet an einer Vorderseite des Lüfters (19) angeordnet sind.

## Claims

1. Window area with a wall (2) and an outer insulation (1) arranged on the outer face thereof, the wall and the insulation being perforated by a window opening (4) and a window frame (5) surrounding the window opening (4), **characterized in that** the wall (2) is cut out slightly further, so that an inner face of the outer insulation (1) is free from the wall (2) in a region laterally adjacent to the window frame (5), and that an inner incoming air opening (13) and an inner exit air opening (16) are arranged there on said inner face, each of which are respectively connected, by means of an incoming air line (14) and an exit air line (17) respectively led through the outer insulation (1), to an outer incoming air opening (15) and outer exit air opening (18) respectively arranged outside the window frame (5).

2. Window area according to claim 1, **characterized in that** the inner incoming air opening (13) and the inner exit air opening (16) are located in a cladding (9) that adjoins the window frame (5) and covers the inner face of the outer insulation (1) there.

3. Window area according to claim 2, **characterized in that** the inner incoming air opening (13) and the inner exit air opening (16) are arranged in a depression (12) of the cladding (9).

4. Window area according to any one of claims 1 to 3, **characterized in that** the inner incoming air opening (13) and the inner exit air opening (16) are vertically spaced apart from each other.

5. Window area according to any one of claims 1 to 4, **characterized in that** the outer incoming air opening (15) lies at the reveal (6) of the window opening (4), while the outer exit air opening (18) lies on the outer face of the outer insulation (1) opposite the inner face, or vice versa.

6. Window area according to any one of claims 1 to 5, **characterized in that** the incoming air line (14) and the exit air line (17) are each led horizontally through the outer insulation (1).

7. Window area according to any one of claims 1 to 6, **characterized in that** it comprises a fan (19) arranged next to the window frame (5), the fan having an incoming air inlet adjoining the inner incoming air opening (13) and an incoming air outlet (21) connected thereto via an incoming air channel, and an exit air outlet adjoining the inner exit air opening (16) and an exit air inlet (22) connected thereto via an exit air channel, wherein the incoming air channel and the exit air channel form a heat exchanger.

8. Window area according to claim 7, **characterized in that** the fan (19) has a ventilator at least in the incoming air channel or in the exit air channel.

9. Window area according to claim 3 and claim 7 or 8, **characterized in that** the fan (19) is inserted into the depression (12) of the cladding (9) with a back wall.

10. Window area according to any one of claims 7 to 9, **characterized in that** the incoming air outlet (21) and the exit air inlet (22) are arranged vertically spaced apart from each other on a front face of the fan (19).

## Revendications

1. Région de fenêtre avec une paroi (2) et une isolation extérieure (1) disposée sur la face extérieure de celle-ci, la paroi et l'isolation étant perforées par une ouverture de fenêtre (4) et un encadrement de fenêtre (5) entourant l'ouverture de fenêtre (4), **caractérisée en ce que** la paroi (2) est un peu plus découpée, de telle manière qu'une face intérieure de l'isolation extérieure (1) est libre de la paroi (2) dans une région latérale à l'encadrement de fenêtre (5), et **en ce que** une ouverture d'admission d'air intérieure (13) et une ouverture d'évacuation d'air intérieure (16) sont y disposées, sur ladite face intérieure, les ouvertures étant respectivement reliées, au moyens d'une ligne d'admission d'air (14) et une ligne d'évacuation d'air (17) respectivement passées à travers l'isolation extérieure (1), avec une ouverture d'admission d'air extérieure (15) et une ouverture d'évacuation d'air extérieure (18) qui sont disposées à l'extérieure de l'encadrement de fenêtre (5).

2. Région de fenêtre selon la revendication 1, **caractérisée en ce que** l'ouverture d'admission d'air intérieure (13) et l'ouverture d'évacuation d'air intérieure (16) se trouvent dans un recouvrement (9) qui se raccorde à l'encadrement de fenêtre (5) et y recouvre la face intérieure de l'isolation extérieure (1).

3. Région de fenêtre selon la revendication 2, **caractérisée en ce que** l'ouverture d'admission d'air intérieure (13) et l'ouverture d'évacuation d'air intérieure (16) sont disposées dans un enfoncement (12) du recouvrement (9).

4. Région de fenêtre selon l'une quelconque des revendications 1 à 3, **caractérisée en ce que** l'ouverture d'admission d'air intérieure (13) et l'ouverture d'évacuation d'air intérieure (16) sont verticalement espacées l'une de l'autre.

5. Région de fenêtre selon l'une des revendications 1 à 4, **caractérisée en ce que** l'ouverture d'admission d'air extérieure (15) se trouve au niveau de l'intrados (6) de l'ouverture de fenêtre (4), tandis que l'ouverture d'évacuation d'air extérieure (18) se trouve dans la face extérieure, opposée à la face intérieure, de l'isolation extérieure (1), ou inversement.

6. Région de fenêtre selon l'une quelconque des revendications 1 à 5, **caractérisée en ce que** la ligne d'admission d'air (14) et la ligne d'évacuation d'air (17) sont respectivement passées horizontalement à travers l'isolation extérieure (1).

7. Région de fenêtre selon l'une quelconque des revendications 1 à 6, **caractérisée en ce qu'**elle comprend un aérateur (19) disposé à coté de l'encadrement de fenêtre (5), l'aérateur ayant une entrée d'admission d'air qui se raccorde à l'ouverture d'admission d'air intérieure (13), et une sortie d'admission d'air (21) étant reliée avec l'entrée au moyens d'un conduit d'admission d'air, ainsi qu'une sortie d'évacuation d'air qui se raccorde à l'ouverture d'évacuation d'air intérieure (16) et une entrée d'évacuation d'air (22) qui est reliée avec la sortie au moyens d'un conduit d'évacuation d'air, le conduit d'admission d'air et le conduit d'évacuation d'air formant un échangeur de chaleur.

8. Région de fenêtre selon la revendication 7, **caractérisée en ce que** l'aérateur (19) comprend un ventilateur au moins dans le conduit d'admission d'air ou le conduit d'évacuation d'air.

9. Région de fenêtre selon la revendication 3 et la revendication 7 ou 8, **caractérisée en ce que** l'aérateur (19) est inséré dans l'enfoncement (12) du recouvrement (9) avec une paroi arrière.

10. Région de fenêtre selon l'une quelconque des revendications 7 à 9, **caractérisée en ce que** la sortie d'admission d'air (21) et l'entrée d'évacuation d'air (22) sont disposées verticalement espacées l'une de l'autre sur une face avant de l'aérateur (19).
